# FASCICULE DE BREVET EUROPEEN

(11) **EP 2 534 758 B1**
(45) Date de publication et mention de la délivrance du brevet: **02.04.2014**
(21) Numéro de dépôt: 11708525.8
(22) Date de dépôt: 01.02.2011
(51) Int. Cl.: H04B 1/20, B60R 11/02

(54) **KIT POUR ÉQUIPEMENT AUDIOVISUEL DE VÉHICULE**
KIT FÜR EINE AUDIOVISUELLE VORRICHTUNG EINES FAHRZEUGS
KIT FOR AN AUDIOVISUAL DEVICE OF A VEHICLE

(30) Priorité: 11.02.2010 FR 1000565
(43) Date de publication de la demande: 19.12.2012
(73) Titulaire: PSB Investissement, 93110 Rosny Sous Bois (FR)
(72) Inventeur: SAMUEL, Philippe, F-93360 Neuilly Plaisance (FR); PIERSON, Gilles, F-57430 Le Val de Geblange (FR)
(74) Mandataire: Plaçais, Jean Yves
(86) Numéro de dépôt international: PCT/FR2011/000061
(87) Numéro de publication internationale: WO 2011/098682

(56) Documents cités:
- EP-A2- 1 150 437
- US-A1- 2006 170 564
- US-A1- 2007 197 263
- US-B1- 6 519 475

## Description

L'invention concerne l'équipement audiovisuel des véhicules.

Il est devenu courant d'équiper un véhicule non seulement d'une installation autoradio, avec lecteur de cassette, puis lecteur de disque optique (CD, puis DVD), mais aussi d'une fonction téléphonique. Au début, on a utilisé la fonction de communication dite « Bluetooth » d'un téléphone cellulaire pour le faire coopérer avec l'installation de bord du véhicule. L'avantage est de bénéficier de tout ce qui se trouve dans le téléphone mobile, notamment son annuaire. L'inconvénient est que la mise en service du téléphone cellulaire dans le véhicule nécessite des manipulations d'une certaine difficulté pour les non-initiés. On en est donc venu à munir l'installation de bord du véhicule d'une fonction téléphonique, reproduisant les fonctions de base d'un téléphone cellulaire, essentiellement téléphonie et messagerie. Certains opérateurs fournissent des cartes SIM dites jumelles, qui permettent de coupler la ligne du téléphone cellulaire et une ligne attribuée à la téléphonie de bord du véhicule. On peut même recopier l'annuaire contenu dans la carte SIM du téléphone cellulaire principal.

Sont apparus plus récemment les téléphones mobiles dits « intelligents ». Leurs fonctionnalités sont nombreuses, et leur interface utilisateur particulièrement travaillée. Il reste possible de les connecter, par exemple par communication Bluetooth, avec l'installation de bord d'un véhicule. Mais, dans ce cas, le contrôle reste à l'installation de bord d'un véhicule, ce qui n'est pas complètement satisfaisant.

La présente invention vient améliorer la situation.

L'invention part d'un kit pour équipement audiovisuel de véhicule, du type comprenant d'une part un module autoradio sans face avant, pour montage dans un logement du tableau de bord, en coopération avec une alimentation électrique, une antenne radio, et au moins un transducteur électroacoustique de bord, ledit module autoradio étant capable de recherche automatique des stations, et d'autre part des moyens de commande de ce module autoradio.

Selon un aspect de l'invention, ce kit comprend en outre une embase pour un téléphone mobile dit intelligent, l'embase étant prévue pour montage au tableau de bord, et comprenant un connecteur pour le téléphone, et son alimentation, au moins un applicatif radio, à installer sur le téléphone pour gérer des fonctions radio du module autoradio, le téléphone comprenant lui-même un applicatif téléphonique, et un gestionnaire d'applicatifs audio, un conditionneur relais à processeur, agencé pour être interconnecté entre l'embase et des éléments du module autoradio, afin de recevoir du téléphone les signaux audio des applicatifs avec son, et de recevoir du module les signaux audio radio, ce conditionneur relais comprenant un commutateur de sélection d'entrée pour alimenter un préamplificateur, et un gestionnaire d'applicatifs, qui surveille le dernier applicatif lancé, pour commander le commutateur de sélection d'entrée selon que ce dernier applicatif lancé est ou non un applicatif radio.

Très avantageusement, le kit comprend en outre un applicatif de commande de fonctions d'amplification. Et le conditionneur relais comprend un convertisseur, pour commander le préamplificateur en fonction de paramètres issus dudit applicatif de fonctions d'amplification.

Selon un autre aspect de l'invention, distinct du premier, le conditionneur relais comprend une fonction de gestion de la recherche des stations, et une fonction de sélection d'une station radio, toutes deux sous le contrôle dudit applicatif radio.

D'autres caractéristiques sont intéressantes, séparément ou en combinaison :
- lesdits applicatifs peuvent être construits à partir d'une interface utilisateur de base comprenant une batterie de boutons virtuels, surmontés d'une zone délimitée de navigation, sensible à l'action tactile parallèlement au grand axe des boutons.
- pour l'applicatif de commande de fonctions d'amplification, les boutons correspondent aux paramètres graves, medium, aigus, balance et équilibre avant/arrière, tandis que la zone délimitée de navigation permet le réglage du paramètre correspondant au dernier bouton actionné.
- l'applicatif radio comprend une vue de base où les boutons représentent des stations radio mémorisées, tandis qu'une station en cours s'affiche dans la zone délimitée de navigation, laquelle permet la sélection d'une station dans la bande.
- le kit comprend un applicatif de réglage, dont un bouton commande la mise en service ou non de la recherche des stations.
- le kit comprend un applicatif de réglage des tons de ladite interface utilisateur de base.
- le conditionneur relais comprend en outre une connexion pour faire communiquer un microphone de bord avec le téléphone, au moins pour l'applicatif téléphonie.
- le conditionneur relais à processeur est monté dans l'embase, entre au moins un connecteur vers le téléphone et au moins un connecteur vers le module autoradio.
- l'embase comprend une commande marche/arrêt, actionnable en présence du téléphone.
- l'embase est pivotante entre une position horizontale et une position verticale.
- le kit s'associe à un téléphone mobile dit intelligent, conjugué de l'embase, c'est à dire que sa forme et son connecteur s'accordent avec ceux de l'embase.

D'autres caractéristiques et avantages de l'invention apparaîtront à l'examen de la description détaillée ci-après, et des dessins annexés, sur lesquels :
- la figure 1 illustre le schéma de principe d'une installation audio de bord munie du kit selon la présente invention,
- la figure 2A illustre en perspective une embase pour recevoir un téléphone mobile,
- la figure 2B illustre, selon une autre perspective, la même embase munie d'un téléphone mobile, en position érigée,
- la figure 2C montre, en coupe longitudinale, un mécanisme de liaison pour l'embase dans un premier état de fonctionnement,
- la figure 2D est analogue à la figure 2C, le mécanisme étant dans un second état de fonctionnement,
- la figure 3 est un autre schéma de principe, correspondant à celui de la figure 1, mais plus orienté sur l'organisation matérielle,
- la figure 4 illustre schématiquement, en vue de face, le téléphone en position longitudinale dans l'embase, avec une vue d'écran générique,
- la figure 5 illustre schématiquement, en vue de face, le téléphone en position transverse dans l'embase, avec une vue d'écran générique transposée,
- la figure 6 est un diagramme de flux associé à une fonction "choix d'une station radio",
- la figure 7 est un diagramme de flux associé à une fonction "recherche-suivi d'une station radio", et
- la figure 8 est une vue en perspective illustrant l'embase avec son téléphone, montée en face avant d'un module autoradio de bord.

Les dessins et la description ci-après contiennent, pour l'essentiel, des éléments à caractère certain. Les dessins font partie intégrante de la description et pourront donc non seulement servir à mieux faire comprendre la présente invention, mais aussi contribuer à sa définition, le cas échéant.

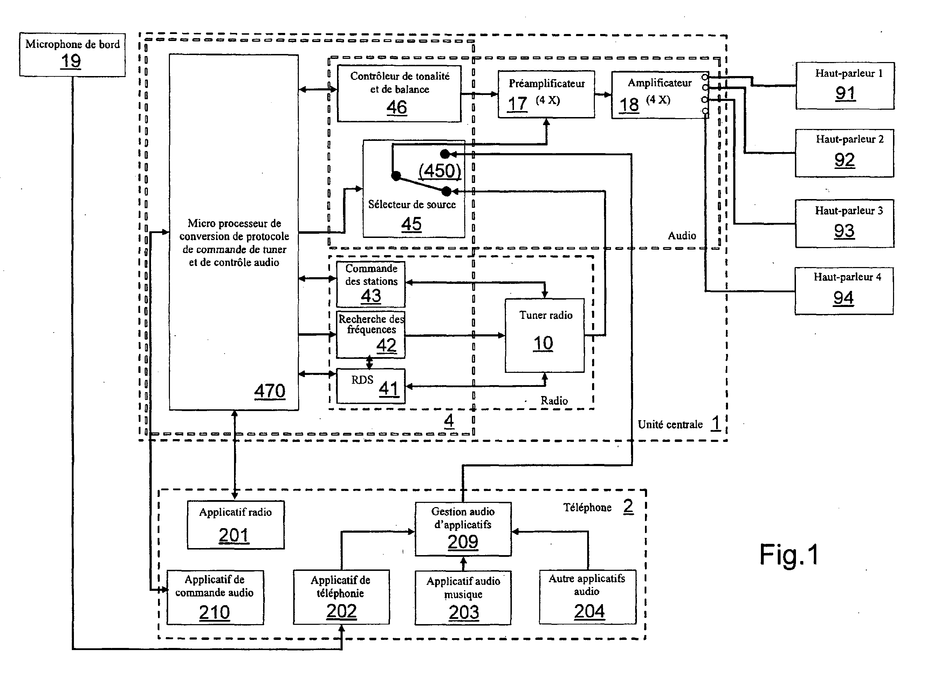

Il est fait maintenant référence à la figure 1. Il s'agit d'une installation audio de bord pour automobile.

L'installation comporte un module de base 1, qui comprend un syntoniseur ou tuner radio 10, un préamplificateur 17, suivi d'un amplificateur 18, qui sont ici tous deux à quatre voies. Le nombre de voies est lié au fait que l'amplificateur 18 alimente un système de transducteurs électroacoustiques 91 à 94. Ils sont le plus souvent au nombre de quatre, répartis à l'intérieur de l'habitacle du véhicule pour obtenir une bonne acoustique (droite/gauche et avant/arrière).

Le syntoniseur 10 est d'un type connu qui fournit une sortie sous forme de signaux analogiques audio à deux voies.

On sait par ailleurs interconnecter un téléphone mobile avec une installation audio de bord pour automobile. Mais, en ce cas, c'est l'installation de bord qui prend le contrôle du téléphone mobile. Ce mode opératoire manque de souplesse, notamment avec les téléphones mobiles dits "intelligents" (en anglais "smartphone"), qui sont apparus depuis quelque temps. De plus, de nombreuses fonctions du téléphone mobile intelligent deviennent d'utilisation difficile, voire impossible, du moins pour le conducteur de l'automobile.

Parmi les téléphones mobiles "intelligents", l'un des plus connus est le modèle "iPhone" (marque déposée) de la Société Apple Corporation. Dans la suite, le mot "téléphone" vise en principe un téléphone intelligent de ce type, ou ayant des fonctionnalités sensiblement équivalentes, au moins en ce qui concerne les fonctionnalités considérées ici.

La présente invention utilise un tel téléphone, qui est de préférence monté au tableau de bord sur un support spécial, comme on le verra plus loin. Le support permet des connexions du téléphone vers le tableau de bord.

La Demanderesse a décidé d'interconnecter le téléphone au module de base 1 à travers un ensemble conditionneur relais 4. Ce conditionneur 4 va servir de relais, tant du point de vue de la connectique que du traitement des données, entre le téléphone et le module de base 1. Il comporte à cet effet un microprocesseur 470, ou équivalent.

Le conditionneur 4 comprend ici :
- une interface relais 41 pour gérer les fonctions "RDS" du tuner 10,
- une interface relais 42 pour gérer la recherche des stations radio
- une interface relais 43 pour gérer la sélection et la mémorisation d'une station radio,
- un commutateur-sélecteur 45, et
- une interface relais 46 pour gérer la commande des réglages audio du préamplificateur 17.

La Demanderesse propose également un jeu de "logiciels applicatifs" ou "applications" pour l'iPhone. Dans la suite, on les nommera simplement "applicatifs". Ainsi, il est proposé pour le téléphone 2 de la figure 1 un applicatif radio 201, et un gestionnaire d'applicatifs 200. L'invention utilise l'ensemble de fonctions logicielles et matérielles de téléphonie 202 que comprend normalement un tel téléphone. On appellera cet ensemble "applicatif téléphonie 202" pour simplifier.

L'applicatif téléphonie 202 coopère avec une gestion audio 209, qui centralise aussi les sons issus d'autres applicatifs, comme un applicatif audio musique 203, qui permet par exemple de jouer des fichiers musicaux enregistrés ou téléchargés, ou encore d'autres applicatifs avec sons 204, tels que des jeux. Normalement, la gestion audio 209 envoie les sons vers les hauts parleurs du téléphone. Mais les signaux sonores analogiques sont également envoyés vers le connecteur principal du téléphone, qui peut transmettre un ordre de désactivation des hauts parleurs intégrés au téléphone.

L'applicatif radio 201 sera décrit plus en détail ci-après. Il existe des téléphones avec tuner intégré, mais ils sont inadaptés à l'usage en automobile. Ils ne permettent pas une réception au-delà de 50 km/h. De plus les fonctions du tuner sont sommaires, et ne comportent pas par exemple de fonction "Radio Data System" (RDS).

Il est encore prévu un applicatif séparé de commandes audio 210, sur lequel on reviendra aussi.

On décrira maintenant un premier aspect de la présente invention.

L'affichage d'un téléphone comme l'iPhone est conditionné par le dernier applicatif sélectionné. Il existe donc une fonction logicielle qui retourne le dernier applicatif sélectionné. De plus, comme on le verra plus loin, le téléphone peut indiquer ses états à l'extérieur sous forme de messages. Ainsi, il est possible au microprocesseur 470 de savoir et mémoriser quels sont les applicatifs en cours.

Le microprocesseur 470 va utiliser ces informations, pour déterminer si le dernier appelé parmi les applicatifs est l'applicatif radio 201, ou l'un d'entre eux. Ainsi, le commutateur sélecteur 450 du bloc à fonction de commutation 45, amène au préamplificateur 17 :
A- la sortie sons à 2 voies du tuner 10, si le dernier applicatif vu par le gestionnaire d'applicatifs 200 est l'applicatif radio 201 (ou un applicatif lié à la radio).
B- dans le cas contraire, et par défaut, la sortie numérique 2 voies du gestionnaire audio 209.

Une variante consisterait à surveiller aussi un jeu prédéfini d'applicatifs, susceptibles de produire du son, comme par exemple l'applicatif téléphonie 202, et le ou les applicatifs audio 203 et avec sons 204. Le microprocesseur 470 détermine si l'un de ces applicatifs (du jeu prédéfini) a été lancé et non refermé, auquel cas il commande l'état B. On peut alors prévoir un état (C) dans lequel les entrées son vers le préamplificateur seront à la masse.

Dans le mode de réalisation particulier décrit ci-après, l'affichage de base (Tableau T1) de l'applicatif radio 201 impose le mode (A) ci-dessus. De préférence, il en est de même pour l'affichage secondaire de réglage (Tableau T2).

L'entrée du préamplificateur 17 est à 2 voies analogiques. De manière connue, le préamplificateur 17 peut dédoubler les signaux d'entrée gauche et droite pour les répartir en signaux avant et arrière, en fonction d'une commande de balance Av/Ar ou "fader".

La réalisation logicielle du commutateur logiciel 450 est accessible à l'homme du métier, en utilisant par exemple les principes de commutateurs (ou switch) informatiques.

Des aspects mécaniques seront maintenant considérés.

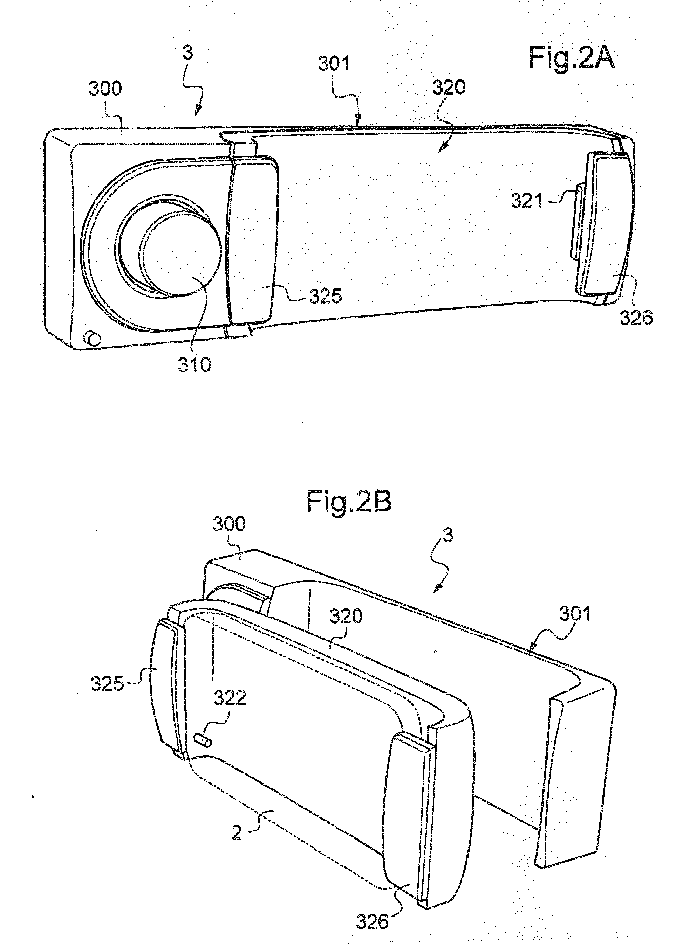

Les figures 2A à 2D illustrent un mode de réalisation particulier du support de téléphone 3, ou embase, utilisé selon la présente invention.

L'embase 3 comporte un cadre support 300, dont la partie gauche reçoit un bouton 310, qui peut servir de commande de volume par rotation et de marche/arrêt par poussée. Par exemple, sur une poussée longue de deux secondes, l'appareil allumé engendrera une fonction d'arrêt. Une pression courte enclenche ou déclenche la sourdine en mode sous tension. L'appareil éteint, une pression courte mettra le système sous tension.

Dans sa partie droite 301, le cadre reçoit un réceptacle pour téléphone 320, conformé au téléphone considéré, par exemple iPhone, avec un connecteur 321 principal visible à droite sur la figure 2A, et un autre connecteur 322, ici une fiche jack, visible à gauche sur la figure 2B. Sont également prévus deux volets de maintien 325 et 326.

Le téléphone 2 est mis en place comme suit. Son extrémité est engagée sous le volet 326, puis sur le connecteur principal 321. Pendant ce temps, le connecteur 321 se dégage un peu en translation vers la droite, à l'encontre d'un rappel élastique, par exemple un ressort à l'arrière du connecteur. L'élément du connecteur 321 qui est du côté du réceptacle 320 s'escamote alors à l'encontre d'un rappel élastique, de sorte qu'à l'autre bout on peut engager le téléphone sous le volet 325, puis sa prise sur la fiche jack 322 du réceptacle 320. Les extrémités du réceptacle sont conformées pour épouser les bords du téléphone, suffisamment pour assurer le maintien en place du téléphone malgré les vibrations ressenties à bord d'un véhicule. La hauteur du cadre 300 est généralement de 58 mm. Un téléphone comme iPhone, dont le petit côté mesure 62 mm, déborde donc un peu. Dans de nombreux véhicules, il est nécessaire d'extraire de 45 millimètres le support 320 pour pouvoir disposer le téléphone dans le support. Sinon, la hauteur limitée de 58 mm n'est pas suffisante pour permettre d'insérer un téléphone comme iPhone, en mode paysage dans ce type d'emplacement.

La figure 2B illustre dans une vue différente le cadre 300, le réceptacle 320, et, dans ce mode de réalisation, un téléphone 2 mis en place dans le réceptacle 320. Le réceptacle est représenté écarté vers l'avant, par exemple d'environ 45 millimètres. Cet écartement permet le pivotement du téléphone entre la position représentée, qui est horizontale, et une position verticale.

Dans un mode de réalisation, on a, de l'intérieur vers l'extérieur : un mécanisme permettant de pivoter entre la position horizontale et la position verticale, une rotule permettant l'inclinaison à 45° dans tous les angles, puis le réceptacle 320. Le réceptacle 320 est interconnecté au cadre 300 par un câble supportant une rotation de 90°, qui peut traverser la rotule et le mécanisme de pivotement.

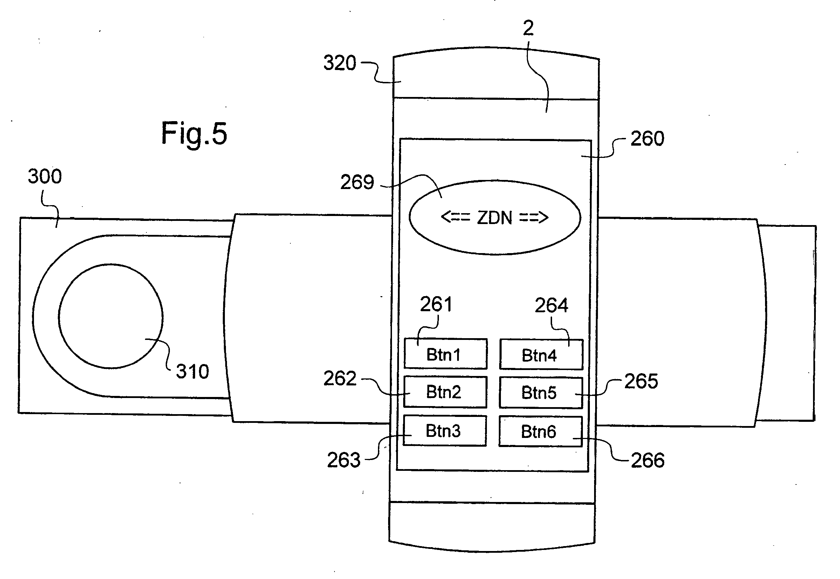

Le mouvement est le suivant. Le téléphone étant en place, l'usager appuie dessus, ce qui le déverrouille et le fait avancer vers l'usager, avec le réceptacle 320, d'environ 45 mm par rapport au cadre 300. Dans cette position, on peut faire pivoter le téléphone 2 et son réceptacle 320 en position perpendiculaire (figure 5). La position angulaire du téléphone est ajustable sur +/- 15 °, en vertical comme en horizontal.

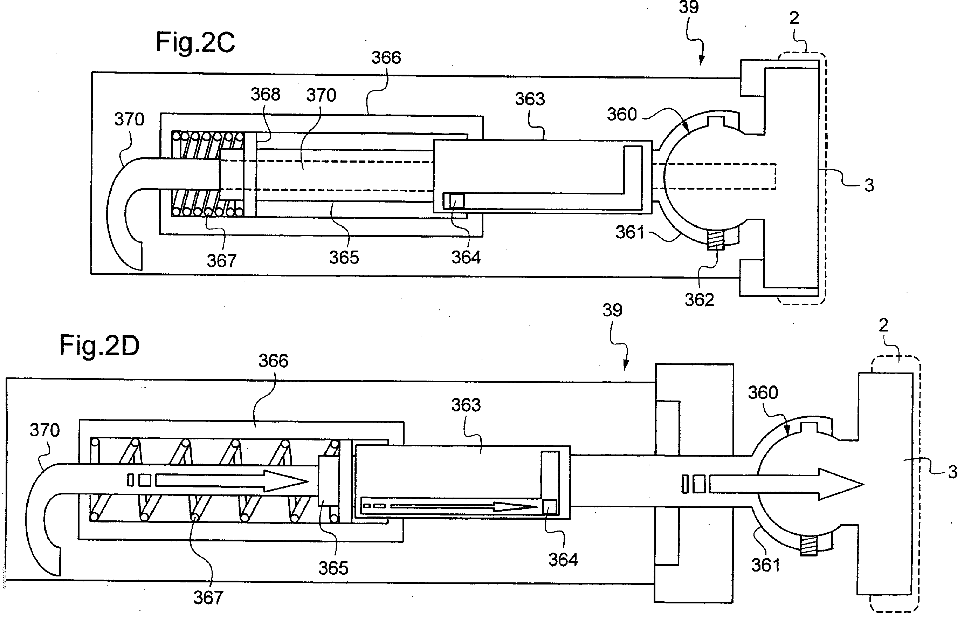

Il est maintenant fait référence à la figure 2C, pour décrire une manière de réaliser ce qui précède.

Le réceptacle 320 du téléphone 2 est visible à droite, en butée sur un châssis support 39 (comprenant le cadre 3 et des éléments à l'arrière). Le support 39 est monté sur une rotule 360 logée dans une tête 361. La rotule est solidaire d'une tige centrale 365, évidée, qui pénètre dans un cylindre 366 à travers un coulisseau d'entrée 363, pour finir en appui sur un piston 368 qui comprime un ressort 367 vers le fond du cylindre 366. Un câble 370 traverse l'ensemble pour venir rejoindre le connecteur de téléphone à l'intérieur du cadre support 3. Le coulisseau 363 est fixe par rapport au cylindre 366. Il est muni d'un ergot 364, qui peut suivre un chemin de came horizontal d'abord, à partir de la gauche du coulisseau, puis en arc de cercle, comme visible à droite du coulisseau 363.

Enfin, le piston 368 est muni d'un encliquetage (non représenté), qui le maintient en place, le ressort 367 étant comprimé. Cet encliquetage est relâché par poussée vers la gauche de la figure. Ainsi, une poussée sur le téléphone 2 et/ou son réceptacle 320 va enfoncer la tige 365 vers la gauche, et libérer le piston 368 dont elle est solidaire, et le ressort 367 ramène alors tout l'ensemble vers la droite, comme illustré sur la figure 2D. Le câble 370 est muni d'une réserve sollicitée élastiquement (non représentée), pour accepter le déplacement sans tension excessive.

En même temps, l'ergot 364 a atteint la zone en arc de cercle du coulisseau 363. On peut donc faire pivoter l'ensemble téléphone 2 et support 3 de 90° dans le sens des aiguilles d'une montre, par exemple.

On peut aussi incliner le téléphone 2 et son support 3 de plus ou moins 15° dans chaque sens. La course est limitée par l'ergot 362 en coopération avec des rainures de la rotule 360.

On décrira maintenant les opérations inverses. S'il est en position verticale, le téléphone est ramené dans la position horizontale de la figure 2D. À partir de là, une poussée sur l'ensemble jusqu'à ré-encliqueter le piston 368 dans la position de la figure 2C remet les choses à l'état initial.

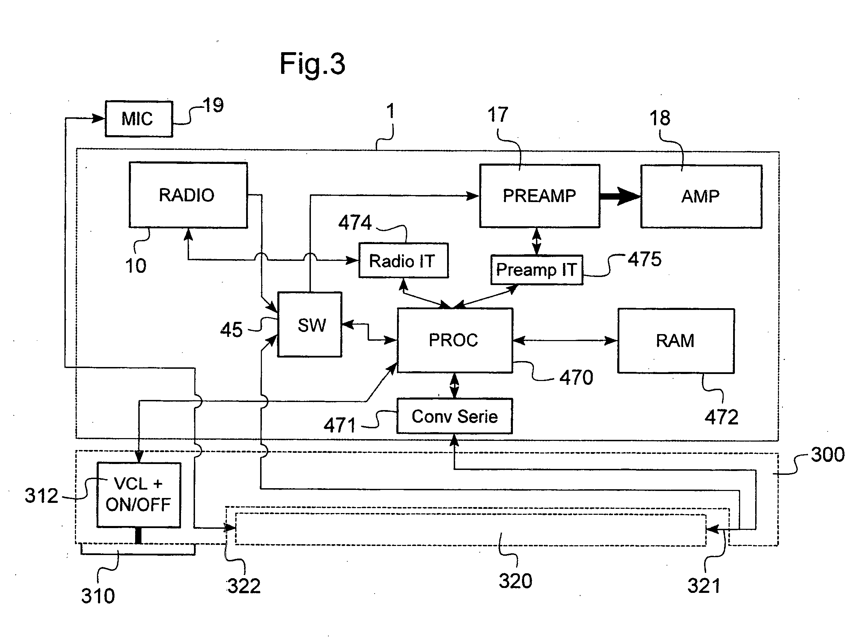

La figure 3 montre une vue matérielle correspondant à la Figure 1.La partie basse de la figure 3 fait apparaître schématiquement les interconnexions. On y retrouve le réceptacle 320, avec, à ses deux extrémités, la connexion en 321 pour le connecteur principal du téléphone, et la connexion en 322 pour sa prise jack écouteur /microphone. A gauche, le bouton de volume 310 est associé à une électronique de gestion 312, qui convertit l'information marche-arrêt en donnée binaire, et réalise un encodage numérique de la commande de volume délivrée par rotation du bouton.

L'ensemble est interconnecté avec le conditionneur relais, qui a été décrit fonctionnellement en référence à la figure 1. On fait apparaître ici que ce conditionneur relais 4 est principalement articulé sur un microprocesseur 470, associé à de la mémoire vive 472 (qui peut d'ailleurs être incorporée au processeur). La connexion allant au jack 322 apporte au téléphone le signal "micro" d'un microphone de bord 19, tandis que le fait que la fiche jack est branchée désactive mécaniquement le microphone incorporé au téléphone. Les connexions d'alimentation, notamment du téléphone, ne sont pas représentées.

Sur son connecteur principal, un iPhone (Marque déposée) délivre les lignes indiquées dans le tableau T0a ci-après, entre autres (d'où la numérotation discontinue des broches).

| **Tableau T0a** | | |
|---|---|---|
| **Pin (Broche)** | **Signal** | **Description** |
| 1 | GND | Masse (Ground -) |
| 2 | GND | Masse Audio & Video (-) |
| 3 | Right | Line Out - R(+) (sortie Audio, canal droit) |
| 4 | Left | Line Out - L(+) (sortie Audio, canal gauche) |
| 11 | GND | si à la masse, envoie les signaux audio sur les broches 3-4, et désactive le haut-parleur interne |
| 12 | Tx | TxD série emission |
| 13 | Rx | RxD série reception |
| 18 | 3.3V | alimentation 3.3V (+) |
| 19,20 | +12V | alimentation Firewire Power 12 VDC (+) |
| 21 | Mode | indique le type d'accessoire et valide le mode série (selon la résistance présente) |
| 22 | TPA (-) | FireWire Data TPA (-) |
| 23 | 5 VDC (+) | alimentation USB 5 VDC (+) |
| 24 | TPA (+) | FireWire Data TPA (+) |
| 25 | Data (-) | USB Data (-) |
| 26 | TPB (-) | FireWire Data TPB (-) |
| 27 | Data (+) | USB Data (+) et mode d'alimentation USB |
| 28 | TPB (+) | FireWire Data TPB (+) |
| 29,30 | GND | FireWire Ground (-) |

La broche 11 est à la masse. Le branchement sur le connecteur principal 321 a donc l'effet de déconnecter le haut-parleur intégré à iPhone, et d'activer les sorties audio sur les broches 3 et 4. Ces sorties audio vont au commutateur 45.

A la base, les données numériques sont échangées selon un protocole série dénommé "Apple Accessory Protocol for communication with IPOD". Le microprocesseur 470 est muni d'une interface série 471 pour le dialogue avec le téléphone par données numériques.

La structure des messages peut être celle du tableau T0b ci-après.

| | **Tableau T0b - Message de requête/réponse** | | |
|---|---|---|---|
| **Id** | **zone** | **Taille octets** | **Valeur** |
| A | en-tête | 2 | 0xFF 0x55 (en hexadécimal) |
| B | Longueur | 1 | Taille de C+D+E (octets) |
| C | mode | 1 | le mode auquel la commande fait appel |
| D | command | 2 | Commande sur 2 octets |
| E | Paramètre | 0..n | paramètres optionnels de la commande |
| F | checksum | 1 | 0xXX - (cheksum 8 bits additif) |
| | | | 0x100 - (somme des octets de B+C+D+E & 0xFF) |

Cette structure permet de nombreux types d'échanges de données commande/état entre le téléphone et le microprocesseur, en utilisant à chaque fois une donnée « mode » appropriée. De tels messages sont habituellement utilisés pour télécommander le téléphone. Ici, à l'inverse, ils servent aussi au téléphone pour délivrer des commandes en fonction de données d'état qu'il reçoit ou dont il dispose.

La figure 3 montre encore une interface 474 pour les échanges de données de commande/état avec le tuner 10. Elle montre aussi une interface 475 pour les échanges de données de commande/état avec le préamplificateur 17.

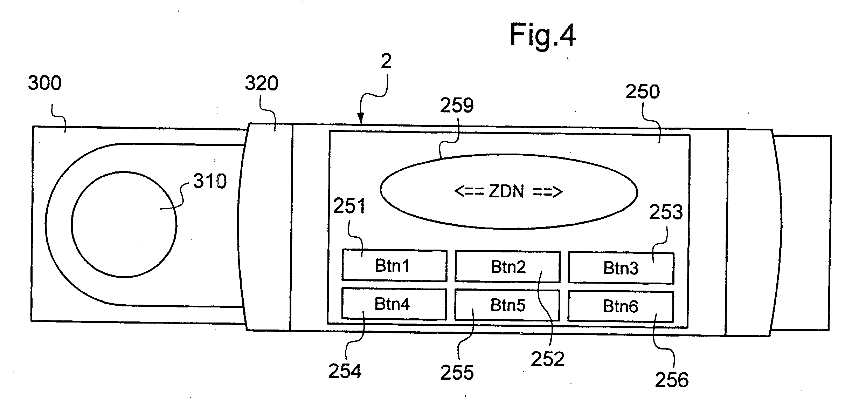

On retrouve sur les figures 4 et 5 les principaux éléments du support de téléphone qui vient d'être décrit, avec notamment le cadre 300, son bouton de volume marche/arrêt 310, le réceptacle 320, et le téléphone 2 logé dans ce réceptacle. Est également représenté un exemple 250 d'un affichage générique utilisé dans le téléphone.

La figure 5 présente la même allure, mais avec le téléphone 2 en position verticale. L'affichage est modifié, de la manière illustrée en 260.

La présente invention utilise un affichage générique. Sur la figure 4, l'affichage comprend une batterie de boutons, 251 à 256, auquel ont été affectées ici les désignations génériques : "Btn1" à "Btn6". Il s'y ajoute une zone de navigation 259, qui est une zone de l'écran spécialement activée pour permettre des déplacements d'un doigt vers la droite et vers la gauche, à des fins que l'on décrira ci-après. La zone de navigation peut comprendre un affichage de texte.

L'affichage 260 de la figure 4 possède la même structure, sauf que la disposition des boutons et de la zone de navigation sur l'écran est modifiée. Les éléments 261 à 266 et 269 de la figure 5 correspondent aux éléments 251 à 256 et 259 de la figure 4.

Il est maintenant possible de revenir à la description des applicatifs à inclure dans le téléphone.

L'applicatif radio 201 de la figure 1 possède un affichage de base, qui peut être défini de la manière définie dans le Tableau T1.

| *Tableau T1* | |
|---|---|
| *Emplacement* | *Affichage* |
| Btn1 à Btn6 | Stations radio préréglées |
| | (appui long = mémorisation de la station en cours) |
| ZDN | réglage de fréquence + affichage de la fréquence courante |
| Haut d'écran | Nom de la station de radio en cours |
| | bouton : bande de fréquences, |
| | bouton : Réglages |

Il est également prévu un affichage secondaire, qui peut être un affichage général de réglage. Cet affichage secondaire va prendre le contrôle de certaines fonctions « RDS » du tuner radio 10. Il s'agit essentiellement de la fonction "recherche des stations 41", et de la fonction "commande des stations 42". L'affichage secondaire peut être défini selon le tableau T2.

| *Tableau T2* | |
|---|---|
| *Emplacement* | *Affichage* |
| Btn1 à Btn6 | quatre boutons pour : "LOCAL OFF", "STEREO", "AF ON", "TA ON" ; 2 boutons inactifs |
| ZDN | passage au réglage de couleurs d'affichage |
| Haut d'écran | bouton : retour à l'écran principal |

A l'extérieur du tuner radio 10, on dispose des sorties suivantes :
- fréquence en cours,
- nom de la station,
- programme en cours,
- Mono/stéréo,
- Ajustement automatique de fréquence (AF) en service ou non.
- Trafic info (TA pour "trafic announcement") en service ou non.
- Réception locale/distante (en FM)

A l'extérieur du tuner radio 10, on dispose des entrées/commandes suivantes :
- Recherche manuelle
- Recherche automatique
- Commande de station présélectionnée. Cela peut se faire par son nom, avec la fonction dite EON qui regroupe entre autres le nom de la station ("PS" pour Program Service) et le code d'identification de la station ("PI" pour Programme Identity), utilisés aussi en RDS.
- Commande d'état mono/stéréo,
- Ajustement automatique de fréquence (AF) en service ou non.
- Commande d'Alertes Trafic (TA) en service ou non.
- Commande de réception locale/distante (en FM)

L'échange de données pour les commandes d'état : mono/stéréo, Ajustement automatique de fréquence (AF) en service ou non, Alertes Trafic (TA) en service ou non, Réception locale/distante (en FM) nécessitent seulement une conversion entre les messages issus du téléphone et les signaux d'état voulus du côté du tuner.

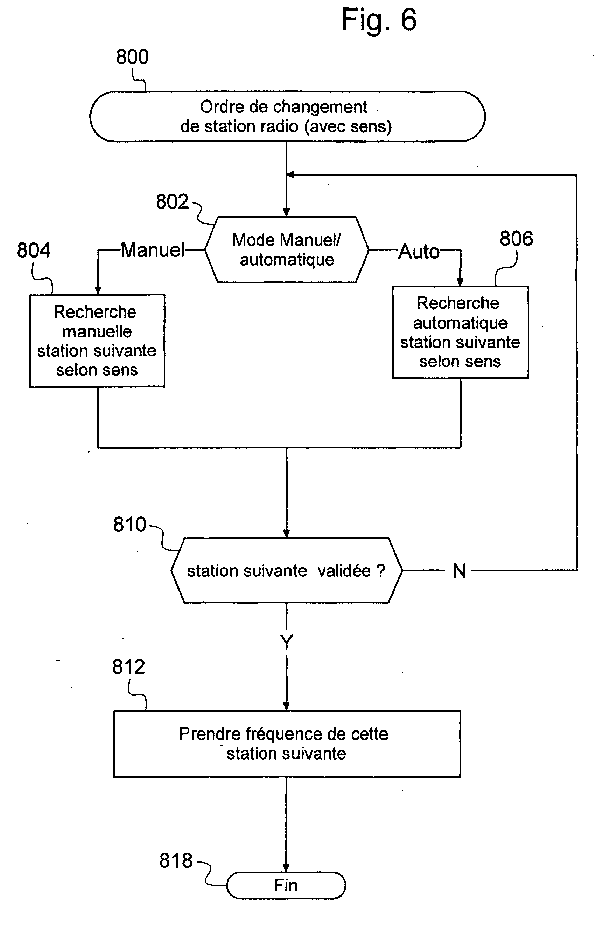

Le réglage de fréquence 42 (choix d'une station radio) est plus élaboré, car le tuner donne peu de facultés de contrôler ce processus. Le mécanisme utilisé dans le téléphone sera maintenant décrit en référence à la figure 6.

A l'entrée 800, on dispose d'un ordre de changement de station radio (avec sens), émis par le téléphone. Le sens est défini par le sens de déplacement du doigt dans la zone tactile ZDN.

Suivant que le mode est manuel ou automatique (802), on indique au tuner de rechercher en mode manuel (804) ou automatique (806) dans le sens indiqué (fréquences plus élevées ou plus basses). Le tuner s'arrête de chercher lorsqu'il a trouvé une station conforme à la requête. En 810, l'usager peut la valider. En l'absence de validation, on retourne en 802. En cas de validation, la nouvelle station est retenue par le tuner et par le téléphone (812), et c'est la fin (818). Selon une variante intéressante et plus directe, la recherche s'arrête en 810, tandis que la station trouvée reste active jusqu'à la recherche suivante.

Quant à la commande de fréquence 43 (station préréglée), un appui court sur le bouton d'une station préréglée l'appelle comme nouvelle station. Un appui long prend la station en cours comme nouvelle station préréglée, enregistrée par son nom « PS ».

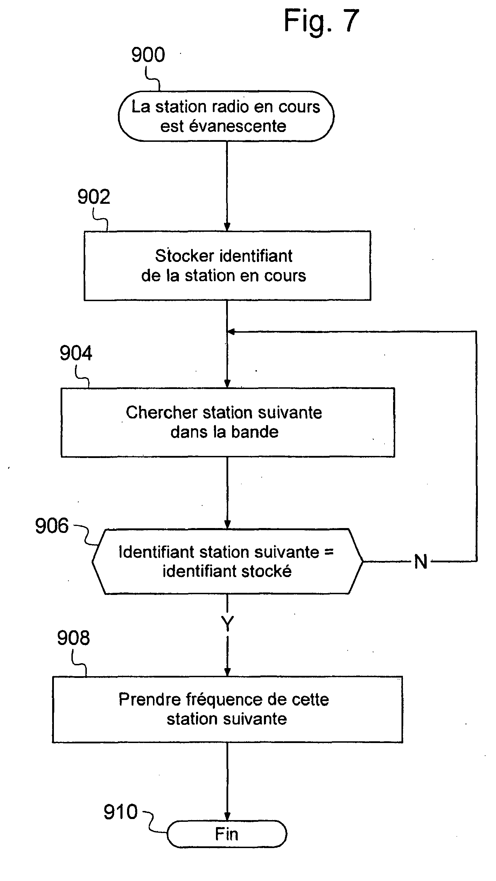

La recherche automatique de Station 41 est également élaborée, car le tuner ne donne aucune de faculté de contrôler ce processus, qui est interne. Le mécanisme utilisé dans le téléphone sera maintenant décrit en référence à la figure 7.

L'état initial 900 est le fait que la station en cours est évanescente, état qui est relayé du tuner au téléphone par le microprocesseur 470. En 902, le téléphone mémorise un identifiant PS nom de la station et un code d'identification PI de la station en cours (voir la connexion entre les blocs 41 et 42 de la figure 1). En 904, on passe au tuner l'ordre de parcourir la bande, et l'on maintient cet ordre jusqu'à trouver (906) une autre fréquence correspondant à l'identifiant mémorisé (avec informations identiques de PS et PI), et qui devient la nouvelle fréquence de travail du tuner (908). A défaut d'avoir trouvé une fréquence de substitution pour la même station, on continue la recherche sur un cycle complet puis on revient sur la dernière fréquence utilisée. Et c'est la fin 910.

On décrira maintenant l'applicatif de commandes audio 210. L'écran d'affichage de cet applicatif peut être conforme au tableau T3.

| *Tableau T3* | |
|---|---|
| *Emplacement* | *Affichage* |
| Btn1 | "Graves" |
| Btn2 | "Medium" |
| Btn3 | "Aigus" |
| Btn4 | Complément Graves ("subwoofer"), une sortie RCA dédiée |
| Btn5 | Balance avant/arrière ("fader") |
| Btn6 | balance gauche/droite |
| ZDN | réglage du paramètre sélectionné + affichage du nom de ce paramètre, et de sa valeur courante. |

Les données et informations correspondantes sont transmises à la fonction de commande audio 46, qui assure la conversion de données issues du téléphone en commandes d'état du préamplificateur 17, sous forme d'entrées/sorties analogiques.

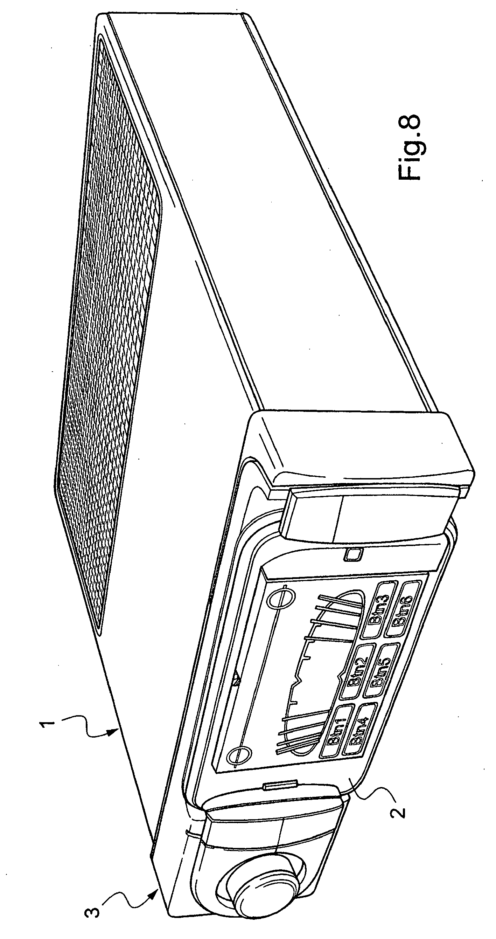

La figure 8 montre comment le téléphone 2 avec son support 3 peut s'inscrire en face avant d'un module autoradio nu 1 (sans face avant). On a décrit comment il prend le contrôle du module autoradio. En outre, toutes les fonctions propres au téléphone sont conservées. Le conditionneur relais 4 est avantageusement logé dans le module 1. En ce cas, le module 1 peut faire partie du kit selon la présente invention.

Certains aspects de l'invention sont utilisables indépendamment les uns des autres. Par exemple, il est possible d'utiliser la fonction de gestion de la recherche des stations, et celle de sélection d'une station radio, en combinaison avec un mode de sélection d'entrée du préamplificateur qui serait différent de celui décrit. De plus, la fonction RDS ("Radio Data System" ou système de données radio) n'est pas rigoureusement indispensable à bord d'une automobile, bien qu'elle y soit fort utile pour la sécurité.

## Revendications

1. Kit pour équipement audiovisuel de véhicule, du type comprenant
- d'une part un module autoradio (1) sans face avant, pour montage dans un logement du tableau de bord, en coopération avec une alimentation électrique, une antenne radio, et au moins un transducteur électroacoustique de bord (91-94), ledit module autoradio étant capable de recherche automatique des stations, et
- d'autre part des moyens de commande de ce module autoradio,
**caractérisé en ce qu'**il comprend en outre
- une embase (300) pour un téléphone mobile dit intelligent, l'embase étant prévue pour montage au tableau de bord, et comprenant un connecteur (321) pour le téléphone, et son alimentation,
- au moins un applicatif radio (201), à installer sur le téléphone pour gérer des fonctions radio du module autoradio, le téléphone comprenant lui-même un applicatif téléphonique (202), et un gestionnaire d'applicatifs audio (209),
- un conditionneur relais à processeur (4), agencé pour être interconnecté entre l'embase et des éléments du module autoradio, afin de recevoir du téléphone les signaux audio des applicatifs avec son, et de recevoir d'un tuner (10) les signaux audio radio, ce conditionneur relais comprenant un commutateur de sélection d'entrée (450) pour alimenter un préamplificateur (17), et
- un gestionnaire d'entrées audio (470), qui surveille le dernier applicatif lancé, pour commander le commutateur de sélection d'entrée (450) selon que le dernier applicatif lancé est ou non un applicatif radio.

2. Kit selon la revendication 1, **caractérisé en ce qu'**il comprend en outre un applicatif de commande de fonctions d'amplification (210), et **en ce que** le conditionneur relais (4) comprend un convertisseur (46), pour commander le préamplificateur (17) en fonction de paramètres issus dudit applicatif de fonctions d'amplification.

3. Kit selon l'une des revendications 1 et 2, **caractérisé en ce que** le conditionneur relais (4) comprend une fonction (41) de gestion de la recherche des stations, et une fonction (42, 43) de sélection d'une station radio, toutes deux sous le contrôle dudit applicatif radio.

4. Kit selon l'une des revendications précédentes, **caractérisé en ce que** lesdits applicatifs sont construits à partir d'une interface utilisateur de base comprenant une batterie de boutons virtuels (251-256), surmontés d'une zone délimitée de navigation (ZDN), sensible à l'action tactile parallèlement au grand axe des boutons.

5. Kit selon la revendication 4, **caractérisé en ce que**, pour l'applicatif de commande de fonctions d'amplification, les boutons correspondent aux paramètres graves, medium, aigus, balance et équilibre avant/arrière, tandis que la zone délimitée de navigation (ZDN) permet le réglage du paramètre correspondant au dernier bouton actionné.

6. Kit selon l'une des revendications 4 et 5, **caractérisé en ce que** l'applicatif radio comprend une vue de base où les boutons représentent des stations radio mémorisées, tandis qu'une station en cours s'affiche dans la zone délimitée de navigation (ZDN), laquelle permet la sélection d'une station dans la bande.

7. Kit selon l'une des revendications 4 à 6, **caractérisé en ce qu'**il comprend un applicatif de réglage, dont un bouton commande la mise en service ou non de la recherche des stations.

8. Kit selon l'une des revendications 4 à 7, **caractérisé en ce qu'**il comprend un applicatif de réglage des tons de ladite interface utilisateur de base.

9. Kit selon l'une des revendications précédentes, **caractérisé en ce que** le conditionneur relais comprend en outre une connexion (19) pour faire communiquer un microphone de bord avec le téléphone, au moins pour l'applicatif téléphonie.

10. Kit selon l'une des revendications précédentes, **caractérisé en ce que** l'embase est pivotante entre une position horizontale et une position verticale.

## Patentansprüche

1. Kit für eine audiovisuelle Ausrüstung eines Fahrzeugs, umfassend:
- einerseits ein Autoradiomodul (1) ohne Vorderseite zur Montage in einer Aufnahme des Armaturenbretts im Zusammenwirken mit einer elektrischen Versorgung, einer Radioantenne und mindestens einem elektroakustischen Bordwandler (91-94), wobei das Autoradiomodul für eine automatische Suche der Stationen geeignet ist, und
- andererseits Mittel zur Steuerung dieses Autoradiomoduls,
**dadurch gekennzeichnet, dass** es ferner Folgendes umfasst:
- einen Sockel (300) für ein so genanntes intelligentes Mobiltelefon, wobei der Sockel für die Montage am Armaturenbrett vorgesehen ist und einen Anschluss (321) für das Telefon und seine Versorgung umfasst,
- mindestens eine Radioanwendung (201), die auf dem Telefon installierbar ist, um Radiofunktionen des Autoradiomoduls zu steuern, wobei das Telefon selbst eine Telefonanwendung (202) und einen Manager für Audioanwendungen (209) umfasst,
- einen Relaiskonditionierer mit Prozessor (4), der derart angeordnet ist, um zwischen dem Sockel und Elementen des Autoradiomoduls zwischengeschaltet zu werden, um von dem Telefon die Audiosignale der Anwendungen mit Ton zu empfangen und um von einem Tuner (10) die Audioradiosignale zu empfangen, wobei dieser Relaiskonditionierer einen Eingangsauswahlschalter (450) umfasst, um einen Vorverstärker (17) zu versorgen, und
- einen Audioeingangsmanager (470), der die letzte geöffnete Anwendung überwacht, um den Eingangsauswahlschalter (450) in Abhängigkeit davon zu steuern, ob die letzte geöffnete Anwendung eine Radioanwendung ist oder nicht.

2. Kit nach Anspruch 1, **dadurch gekennzeichnet, dass** es ferner eine Anwendung für die Steuerung von Verstärkungsfunktionen (210) umfasst, und dass der Relaiskonditionierer (4) einen Umsetzer (46) umfasst, um den Vorverstärker (17) in Abhängigkeit von Parametern, die von der Anwendung für Verstärkungsfunktionsen kommen, zu steuern.

3. Kit nach einem der Ansprüche 1 und 2, **dadurch gekennzeichnet, dass** der Relaiskonditionierer (4) eine Funktion (41) zur Steuerung der Suche der Stationen und eine Funktion (42, 43) zur Auswahl einer Radiostation umfasst, wobei beide unter der Kontrolle der Radioanwendung stehen.

4. Kit nach einem der vorhergehenden Ansprüche, **dadurch gekennzeichnet, dass** die Anwendungen ausgehend von einer Basisbenutzerschnittstelle aufgebaut sind, umfassend eine Gruppe von virtuellen Knöpfen (251-256), über denen eine begrenzte Navigationszone (ZDN) angeordnet ist, die für eine Betätigung durch Berühren parallel zu der großen Achse der Knöpfe empfindlich ist.

5. Kit nach Anspruch 4, **dadurch gekennzeichnet, dass** für die Anwendung für die Steuerung von Verstärkungsfunktionen die Knöpfe den Parametern tief, mittel, hoch, Balance und Gleichgewicht vorne/hinten entsprechen, während die begrenzte Navigationszone (ZDN) die Einstellung des Parameters entsprechend dem letzten betätigten Knopf ermöglicht.

6. Kit nach einem der Ansprüche 4 und 5, **dadurch gekennzeichnet, dass** die Radioanwendung eine Basisansicht umfasst, bei der die Knöpfe gespeicherte Radiostationen darstellen, während eine laufende Station in der begrenzen Navigationszone (ZDN) angezeigt wird, die die Auswahl einer Station in dem Band ermöglicht.

7. Kit nach einem der Ansprüche 4 bis 6, **dadurch gekennzeichnet, dass** er eine Regelungsanwendung umfasst, bei der ein Knopf die Inbetriebnahme oder Nicht-Inbetriebnahme der Suche der Stationen steuert.

8. Kit nach einem der Ansprüche 4 bis 7, **dadurch gekennzeichnet, dass** es eine Anwendung zur Toneinstellung der Basisbenutzerschnittstelle umfasst.

9. Kit nach einem der vorhergehenden Ansprüche, **dadurch gekennzeichnet, dass** der Relaiskonditionierer ferner einen Anschluss (19) umfasst, um ein Bordmikrofon mit dem Telefon zumindest für die Telefonanwendung in Verbindung zu setzen.

10. Kit nach einem der vorhergehenden Ansprüche, **dadurch gekennzeichnet, dass** der Sockel zwischen einer horizontalen und einer vertikalen Position schwenkbar ist.

## Claims

1. Kit for an audiovisual device of a vehicle, of the type comprising
- on the one hand a car radio module (1) without a front face plate, for mounting in a recess in the dashboard, in cooperation with a power supply, a radio antenna, and at least one on-board electroacoustic transducer (91-94), said car radio module being capable of automatically searching for stations, and
- on the other hand means for controlling the car radio module,
**characterised in that** it further comprises
- a base (300) for a so-called smart mobile telephone, the base being provided for mounting on the dashboard and comprising a connector (321) for the telephone, and its power supply,
- at least one radio application (201) which is to be installed on the telephone in order to manage radio functions of the car radio module, the telephone itself comprising a telephony application (202) and an audio application manager (209),
- a relay conditioner with a processor (4), which is arranged to be interconnected between the base and elements of the car radio module in order to receive from the telephone the audio signals of the applications with sound and to receive from a tuner (10) the radio audio signals, the relay conditioner comprising an input selection switch (450) for supplying a preamplifier (17), and
- an audio input manager (470) which monitors the last application launched in order to control the input selection switch (450) according to whether the last application launched is or is not a radio application.

2. Kit according to claim 1, **characterised in that** it further comprises an amplification function control application (210), and **in that** the relay conditioner (4) comprises a converter (46) for controlling the preamplifier (17) as a function of parameters coming from said amplification function application.

3. Kit according to either claim 1 or claim 2, **characterised in that** the relay conditioner (4) comprises a station search management function (41) and a radio station selection function (42, 43), both of which are under the control of said radio application.

4. Kit according to any one of the preceding claims, **characterised in that** said applications are constructed from a basic user interface comprising a group of virtual buttons (251-256) surmounted by a delimited navigation zone (ZDN) which is sensitive to touch parallel to the major axis of the buttons.

5. Kit according to claim 4, **characterised in that**, for the amplification function control application, the buttons correspond to the parameters bass, mid, treble, balance and fade, while the delimited navigation zone (ZDN) allows the parameter corresponding to the last button actuated to be set.

6. Kit according to either claim 4 or claim 5, **characterised in that** the radio application comprises a basic view where the buttons represent stored radio stations, while a current station is displayed in the delimited navigation zone (ZDN), which allows a station in the band to be selected.

7. Kit according to any one of claims 4 to 6, **characterised in that** it comprises a setting application, one button of which controls whether or not the station search function is in use.

8. Kit according to any one of claims 4 to 7, **characterised in that** it comprises an application for setting the colours of said basic user interface.

9. Kit according to any one of the preceding claims, **characterised in that** the relay conditioner further comprises a connection (19) for establishing communication between an on-board microphone and the telephone, at least for the telephony application.

10. Kit according to any one of the preceding claims, **characterised in that** the base is pivotable between a horizontal position and a vertical position
